# EUROPÄISCHE PATENTSCHRIFT

(11) **EP 0 577 134 B1**
(45) Veröffentlichungstag und Bekanntmachung des Hinweises auf die Patenterteilung: **08.10.1997**
(21) Anmeldenummer: 93110551.4
(22) Anmeldetag: 01.07.1993
(51) Int. Cl.: B32B 27/12, B65D 90/04, F16L 55/165, F16L 58/10

(54) **Schichtstoff**
Laminate
Matériau composite

(30) Priorität: 01.07.1992 DE 4221505
(43) Veröffentlichungstag der Anmeldung: 05.01.1994
(73) Patentinhaber: SIMONA AG, D-55606 Kirn/Nahe (DE)
(72) Erfinder: Brenik, Wenzel J., D-55606 Kirn/Nahe (DE); Westermann, Bernhard, D-55606 Kirn/Nahe (DE)
(74) Vertreter: Boeters, Hans Dietrich, Dr.

(56) Entgegenhaltungen:
- EP-A- 0 013 089
- FR-A- 2 389 060
- GB-A- 2 181 670
- US-A- 3 483 896
- US-A- 3 676 242
- US-A- 4 081 303
- US-A- 4 748 070

## Beschreibung

Die Erfindung betrifft Behälter, Rohre oder chemische Apparate aus Metall oder glasfaserverstärktem Polyester, Epoxyharz oder anderen Duromeren, wobei die Behälter, Rohre oder chemischen Apparate mit einer Schichtstoff ausgekleidet sind, wie er beispielsweise als Auskleidungsmaterial im chemischen Apparatebau Verwendung finden kann.

Derartige Schichtstoffe bauen sich regelmäßig aus einer massiven Schicht auf, die gegenüber den jeweils anfallenden Angriffen, beispielsweise durch aggressive Chemikalien, beständig sein soll, und einer Haftvermittlungsschicht, die eine Haftung zwischen der inerten bzw. resistenten massiven Schicht und dem Trägermaterial (z. B. Behältermantel) vermitteln soll.

Nach den Stand der Technik können Haftvermittlungsschichten aus anorganischem oder organischem Material vorgesehen werden. So werden beispielsweise nach der DE-A-2 655 597, der BE-A-848 955 und der US-A-3 723 234 Haftvermittlungsschichten aus Glasfasern und nach der US-A-3 723 234 ferner Haftvermittlungsschichten aus Kohlefasern, Graphitfasern, Keramikfasern oder Asbestfasern vorgeschlagen. Haftvermittlungsschichten aus derartigen anorganischen Materialien kann man dadurch in die massive Schicht einbetten, daß man die massive Schicht erweicht, wie beispielsweise die US-A-3 723 234 vorschlägt, oder daß man die Haftvermittlungsschicht mit einem Klebemittel mit der massiven Schicht verbindet, wie beispielsweise die DE-A-2 655 597 und die BE-A-848 955 vorschlagen.

Zusätzlich schlägt der Stand der Technik auch Haftvermittlungsschichten aus organischen Materialien vor, wie beispielsweise aus Polyacrylnitril (DE-U-8 216 341), Zellstoff und/oder Viskose (DE-A-3 439 526), Polyamid (DE-A-2 918 923 und DE-U-8 216 341) oder Polyester (DE-A-2 818 385 und 2 918 923 und DE-U-8 216 341), wobei diese organischen Haftvermittlungsschichten mit der massiven Schicht dadurch verbunden werden, daß man in der Wärme arbeitet, die massive Schicht erweicht und die Haftvermittlungsschicht unter Druck aufbringt. Nach diesem Stand der Technik bestehen also die Haftvermittlungsschicht und die massive Schicht aus verschiedenem organischen Material, da die massive Schicht bei der Herstellung des Schichtstoffs bei einer Temperatur zu erweichen hat, bei der das Material der Vermittlungsschicht nicht oder noch nicht erweicht. Andererseits oder zusätzlich ist es erwünscht, daß das Material der Haftvermittlungsschicht polare Gruppen aufweist, wie beispielsweise Polyamid, um die Haftung der Haftvermittlungsschicht am Trägermaterial zusätzlich zu verstärken.

Es hat sich jedoch gezeigt, daß das Medium, vor dem ein bestimmter Gegenstand geschützt werden soll, in Abhängigkeit vom Auskleidungsmaterial bzw. vom Material der massiven Schicht, der Art des Mediums sowie den Einsatzbedingungen durch die massive Schicht permeieren und in die Haftvermittlungsschicht eindringen kann. Ein derartiges Eindringen in Haftvermittlungsschichten ist jedoch dann unerwünscht, wenn die Materialien der Haftvermittlungsschichten im Vergleich zur massiven Schicht eine geringere Chemikalienbestängigkeit, insbesondere eine geringere Hydrolysebeständigkeit, aufweisen oder um ein Vielfaches teurer sind.

Ein weiterer Nachteil der bekannten Schichtstoffe ist darin zu sehen, daß die Recyclfähigkeit bekannter Schichtstoffe unbefriedigend ist. Einerseits lassen sich Auskleidungsthermoplaste, bei denen massive Schicht und Haftvermittlungsschicht aus verschiedenem Material bestehen. nicht mehr oder nicht mehr einwandfrei verarbeiten. Andererseits sind Auskleidungsthermoplaste, bei denen sowohl massive Schicht als auch Haftvermittlungsschicht aus einem fluorhaltigen Kunststoff bestehen (US-A-3 723 234), aus Umweltgründen unerwünscht.

Aus EP-A-0 013 089 läßt sich ein Laminat entnehmen, bei dem die massive Schicht (Figur 2 Bezugszahl 35) aus Polypropylen mit einem Füllstoff besteht, bei dem es sich vorzugsweise um Holzmehl handelt (vgl. Seite 4 Zeilen 4/5). Dieser Stand der Technik schlägt ferner vor, dem Laminat ein dekoratives lederartiges Finish oder ein holzartiges Finish zu geben. Eine Anregung für Behälter oder Rohre für den chemischen Apparatebau, insbesondere zur Aufbewahrung aggressiver Chemikalien, läßt sich diesem Stand der Technik jedoch nicht entnehmen.

Erfindungsgemäß werden nun Behälter, Rohre oder chemische Apparate für den chemischen Apparatebau vorgesehen, insbesondere für aggressive Chemikalien, bei denen ein Mantel aus metall- oder glasfaserverstärktem Polyester, Epoxyharz oder anderen Duromeren mit einer Auskleidung aus einem Schichtstoff verklebt ist, der besteht aus
- einer massiven Schicht, die aus Polyethylen oder Polypropylen als Thermoplasten besteht und
- einem auf diese Thermoplasten einseitig fest aufgebrachten textilen Flächengebilde, das aus dem gleichen Thermoplasten besteht und mit dem Mantel verklebt ist.

Ausgehend vom Stand der Technik war nicht vorherzusehen, daß sich dann, wenn massive Schicht und Haftvermittlungsschicht aus dem gleichen Thermopiasten, nämlich Polyethylen oder Polypropylen, bestehen, in Hinblick auf den exponierten Einsatzbereich ausreichende Haftfestigkeitswerte
a) sowohl für die Verbindung massive Schicht / Haftvermittlungsschicht als auch
b) für die Verbindung Haftvermittlungsschicht / Trägermaterial erzielen lassen würden.

Es liegt auf der Hand, daß erfindungsgemäß beim Schichtstoff sowohl die massive Schicht als auch die Haftvermittlungsschicht annähernd die gleiche Beständigkeit gegenüber Chemikalien aufweisen. Ferner können erfindungsgemäß Reste des Schichtstoffs problemlos zu Neuware verarbeitet werden.

Bei einer speziellen Ausführungsform der Erfindung kann die massive Schicht (oder das Flächengebilde) ein Homopoiymerisat eines Monomeren und das Flächengebilde (bzw. die massive Schicht) ein Copolymerisat desselben Monomeren mit ein oder mehreren Como-nomeren sein.

Dabei kann sich das Copolymerisat aus mindestens 50 Mol-% Einheiten aufbauen, die auf das Monomere zurückgehen, das das Monomere des Homopolymerisats ist.

Bei dem textilen Flächengebilde kann es sich um ein Gewebe, ein elastisches Gewirk, ein elastisches Gestrick oder ein Faserflies handeln. Auch hier kann auf den angeführten und den einschlägigen Stand der Technik verwiesen werden.

Erfindungsgemäß ist der Schichtstoff in üblicher Weise verwendbar. Auch kann erfindungsgemäß der Schichtstoff durch Heißpressen beispielsweise zu Klöpperböden verformt werden.

Erfindungsgemäß läßt sich der Schichtstoff beispielsweise auf Metall oder glasfaserverstärkte Polyester, Epoxyharze oder andere Duromere mit ungesättigten Polyesterharzen oder mit Epoxyharzen als Kleber aufkleben, wobei sich überraschend hohe Haftfestigkeiten erzielen lassen. Entsprechendes gilt für eine Ummantelung des Schichtstoffs mit den genannten Materialien.

Nachstehend wird die Erfindung durch Beispiele näher erläutert.

### Beispiel 1

Es wurden eine Thermoplastschicht aus einem Polypropylen-Homopolymer und ein Fasergebilde aus ebenfalls Polypropylen-Homopolymer dadurch miteinander fest verbunden, daß das Fasergebilde direkt nach der Thermoplast-Extrusion bei definierter Temperatur unter Druck in kontinuierlichem Verfahren eingebettet wurde. An den Mustern wurde in Anlehnung an DIN 53397 die Stirnabzugsfestigkeit des Verbundes sowohl vor als auch nach Chemikalieneinlagerung ermittelt. Als Einlagerungsmedium wurde 60-proz. H₂SO₄ bei 90 °C gewählt. Die Einlagerungsdauer betrug 56 Tage. Der erfindungsgemäße Schichtstoff zeigte folgende Festigkeiten: Stirnabzugsfestigkeit vor Chemikalieneinlagerung : 5,5 N/mm² Stirnabzugsfestigkeit nach Chemikalieneinlagerung : 5,3 N/mm².

Wegen der mit dem Auskleidungsmaterial vergleichbar guten Chemikalienbeständigkeit des Haftvermittlungsgewebes gegenüber dem jeweiligen Medium zeigte der Schichtstoff gemäß der Erfindung nach Chemikalieneinlagerung keine signifikant veränderten Haftfestigkeitswerte. Das erfindungsgemäße Beispiel veranschaulicht, daß mit dem Schichtstoff gemäß der Erfindung selbst für verbindungsunfreudiges Polypropylen Verbundfestigkeiten erzielt werden können, die die entsprechenden Forderungen des VCI von beispielsweise 3,5 N/mm² für Polypropylen-Homopolymerauskleidungen sicher erfüllen.

### Beispiel 2

Es wurde Beispiel 1 mit der Ausnahme wiederholt, daß für die Thermoplastschicht ein Polypropylen-Copolymerisat verwendet wurde. Die Festigkeitswerte waren wie folgt:
Stirnabzugsfestigkeit vor Chemikalieneinlagerung : 4,7 N/mm²
Stirnabzugsfestigkeit nach Chemikalieneinlagerung : 4,6 N/mm².

### Vergleichsbeispiel 1

Es wurde Beispiel 1 mit der Ausnahme wiederholt, daß in Analogie zu DE-A-2 918 923 anstatt eines Polypropylen-Flächengebildes ein Fasergebilde aus Polyester verwendet wurde. Es wurden folgende Festigkeitswerte erzielt:
Stirnabzugsfestigkeit vor Chemikalieneinlagerung : 6,3 N/mm²
Stirnabzugsfestigkeit nach Chemikalieneinlagerung : 1,7 N/mm².

### Vergleichsbeispiel 2

Es wurde Beispiel 1 mit der Ausnahme wiederholt, daß anstelle eines Polypropylen-Flächengebildes in Analogie zu DE-A-2 655 597 ein Flächengebilde aus Glasfasern verwendet wurde. Dabei wurden folgende Festigkeitswerte erhalten:
Stirnabzugsfestigkeit vor Chemikalieneinlagerung : 6,1 N/mm²
Stirnabzugsfestigkeit nach Chemikalieneinlagerung : 4,2 N/mm².

## Patentansprüche

1. Behälter, Rohr oder chemischer Apparat für den chemischen Apparatebau, insbesondere für aggressive Chemikalien, bei dem ein Mantel aus Metall oder glasfaserverstärktem Polyester, Epoxyharz oder anderen Duromeren mit einer Auskleidung aus einem Schichtstoff verklebt ist, der besteht aus
- einer massiven Schicht, die aus Polyethylen oder Polypropylen als Thermoplasten besteht, und
- einem auf diese Thermoplasten einseitig fest aufgebrachten textilen Flächengebilde, das aus dem gleichen Thermoplasten besteht und mit dem Mantel verklebt ist.

2. Behälter, Rohr oder chemischer Apparat nach Anspruch 1, dadurch **gekennzeichnet**, daß die massive Schicht (oder das Flächengebilde) ein Homopolymerisat eines Monomeren und das Flächengebilde (bzw. die massive Schicht) ein Copolymerisat desselben Monomeren mit ein oder mehreren anderen Monomeren ist.

3. Behälter, Rohr oder chemischer Apparat nach Anspruch 2, dadurch **gekennzeichnet**, daß sich das Copolymerisat aus mindestens 50 Mol-% Einheiten aufbaut, die auf das Monomere zurückgehen, das das Monomere des Homopolymerisats ist.

4. Behälter, Rohr oder chemischer Apparat nach einem der vorhergehenden Ansprüche, dadurch **gekennzeichnet**, daß das textile Flächengebilde ein Gewebe, ein elastisches Gewirk, ein elastisches Gestrick oder ein Faservlies ist.

## Claims

1. Container, tube or chemical apparatus for chemical apparatus construction, especially for aggressive chemicals, in which a casing made of metal or glass-fibre reinforced polyester, epoxy resin or other duromers is glued to a lining made of a laminate which consists of
- a solid layer which consists of polyethylene or polyproplyene as thermoplastics and
- a textile which is securely applied to one side of these thermoplastics, consists of the same thermoplastic and is glued to the casing.

2. Container, tube or chemical apparatus according to claim 1, **characterised in that** the solid layer (or the textile) is a homopolymer of a monomer and the textile (or the solid layer) is a copolymer of the same monomer with one or a plurality of other monomers.

3. Container, tube or chemical apparatus according to claim 2, **characterised in that** the copolymer is constructed of at least 50 Mol-% units which go back to the monomer which is the monomer of the homopolymer.

4. Container, tube or chemical apparatus according to one of the preceding claims, **characterised in that** the textile is a woven fabric, an elastic knitted fabric or a non-woven fibre structure.

## Revendications

1. Récipient, tuyau ou appareil chimique pour la construction d'appareils chimiques destinés en particulier à des composés chimiques agressifs, dans lequel on colle sur la paroi en métal, en polyester renforcé par des fibres de verte, en résine époxy ou en une autre résine thermodurcissable, un revêtement stratifié composé
- d'une couche massive constituée de polyéthylène ou de polypropylène thermoplastiques, et
- d'un produit textile plat constitué de la même résine thermoplastique, appliqué définitivement sur une face de la couche thermoplastique et qui adhère à la paroi.

2. Récipient, tuyau ou appareil chimique conforme à la revendication 1, caractérisé en ce que la couche massive (ou le produit plat) est formée par un homopolymère d'un monomère et le produit plat (ou la couche massive) est formé par un copolymère de ce même monomère et d'un ou de plusieurs autres monomères.

3. Récipient, tuyau ou appareil chimique conforme à la revendication 2, caractérisé en ce que le copolymère est composé d'au moins 50 % en moles de motifs dérivés du monomère formant l'homopolymère.

4. Récipient, tuyau ou appareil chimique conforme à une des revendications précédentes, caractérisé en ce que le produit textile plat est un produit tissé, un tissu élastique à mailles, un tricot élastique ou un mat non tissé.
